**Europäisches Patentamt**

**European Patent Office**

**Office européen des brevets**

(19)

(11) Veröffentlichungsnummer : **0 348 846 B1**

(12) # EUROPÄISCHE PATENTSCHRIFT

(45) Veröffentlichungstag der Patentschrift :
**03.06.92 Patentblatt 92/23**

(51) Int. Cl.$^5$ : **F04D 29/66,** F04D 29/28,
F16F 15/32

(21) Anmeldenummer : **89111501.6**

(22) Anmeldetag : **23.06.89**

(54) **Ausgewuchtetes Lüfterrad sowie Verfahren und Vorrichtung zur Herbeiführung des Unwuchtausgleiches.**

(30) Priorität : **30.06.88 DE 3822179**

(43) Veröffentlichungstag der Anmeldung :
**03.01.90 Patentblatt 90/01**

(45) Bekanntmachung des Hinweises auf die
Patenterteilung :
**03.06.92 Patentblatt 92/23**

(84) Benannte Vertragsstaaten :
**DE FR GB IT**

(56) Entgegenhaltungen :
**DE-A- 1 403 564
DE-A- 2 019 649
DE-A- 2 629 428
DE-C- 958 147
GB-A- 1 001 153
GB-A- 2 046 360
US-A- 1 762 140**

(56) Entgegenhaltungen :
**US-A- 2 165 069
US-A- 3 694 881
US-A- 4 079 488
MACHINE DESIGN, Vol. 31, 28 Mai 1959, Cleveland R.R. ZENK "Designing for balance" Seiten 104-109**

(73) Patentinhaber : **SIEMENS AKTIENGESELLSCHAFT Wittelsbacherplatz 2 W-8000 München 2 (DE)**

(72) Erfinder : **Moll, Helmut, Dipl.-Ing. (FH) Haselhofstrasse 32 W-8520 Erlangen (DE)**
Erfinder : **Muck, Jürgen, Dipl.-Ing. (FH) Echter Strasse 4 W-8705 Zellingen (DE)**
Erfinder : **Reisenweber, Walter, Dipl.-Ing. (FH) Im Weingarten 8 W-8744 Mellrichstadt (DE)**

**Beschreibung**

Die Erfindung bezieht sich auf ein Verfahren zur Herbeiführung des Unwuchtausgleiches bei einem Lüfterrad, insbesondere einem Lüfterrad aus thermoplastischem Kunststoff, bei dem auf eine Drehachse aufsteckbar eine Nabe mit einer konzentrischen Ringscheibe mit wenigstens einer Reihe von Lüfterlamellen vorhanden ist und bei dem die durch herstellungsbedingte Unrundheiten bewirkte Unwucht über Ausgleichselemente ausgeglichen wird, wobei zur Herbeiführung eines positiven Wuchtausgleichs Ausgleichselemente insbesondere variablen Gewichtes am Lüfterrad befestigt werden.

Lüfterräder werden u.a. für Gebläse zwecks Kühlung von Elektromotoren benötigt. Sie sind häufig aus Kunststoff, insbesondere aus thermoplastischem Material, gebildet und können als zusammenhängendes Teil durch Spritzgießen in Massenfertigung hergestellt werden.

Derartige axiale oder radiale Lüfterräder haben durch die Herstellungstechnologie bedingt üblicherweise eine Unwucht. Vor der Freigabe in der Fertigung durchlaufen sie daher im Rahmen der Qualitätssicherung eine Auswuchtstation, bei der die Unwucht geprüft und durch Aufstecken von sogenannten Wuchtklammern aus Metall an ausgewählten Lamellen die festgestellte Unwucht beseitigt wird. Normalerweise werden solche Wuchtklammern mit Gewichtsabstufungen verwendet, wobei in der Praxis nach dem Feststellen der Unwucht vom Personal nach empirischen Erfahrungen geeignete Wuchtklammern ausgewählt werden. Es ist auch üblich, mehrere Klammern zur Winkelwuchtung zu verwenden. Immer sind dafür entsprechende Erfahrungen notwendig.

Aus der US-A-40 79 488 ist ein Verfahren und eine Vorrichtung zum Aufbau von Lüftergebläsen bekannt, mit denen die einzelnen Lamellen in ihrer Winkelstellung definiert auf der Ringscheibe ausgerichtet werden, so daß Unwuchten am Gebläse von vornherein weitgehend vermieden werdenkönnen. Daneben wird in der GB-A-20 46 360 ein Gebläse für einen Staubsauger beschrieben, bei dem zur Geräuschminimierung die Lamellen gezielt asymmetrisch angeordnet sind. Zum Erreichen eines dynamischen Gleichgewichtes des rotierenden Gebläses müssen an vorher berechneten Stellen der Ringscheibe entweder Zusatzgewichte angebracht oder an entsprechend entgegengesetzten Stellen der Ringscheibe Materialaussparungen eingebracht werden.

Aufgabe der Erfindung ist es demgegenüber, ein Verfahren anzugeben, mit dem das Auswuchten von als ein einziges Fertigteil aus Ringscheibe und Lamellen zusammenhängenden Lüfterrädern, bei deren Herstellung zwangsläufig Unwuchten entstehen, fertigungsintegriert durchführbar ist.

Die Aufgabe ist erfindungsgemäß bei einem Lüfterrad der eingangs genannten Art dadurch gelöst, daß die Ausgleichselemente zur Beseitigung der Unwucht durch Ultraschalleinwirkung am Lüfterrad befestigt werden, wo sie mit dem auszuwuchtenden Teil eine unlösbare Verbindung eingehen.

Bei der Erfindung wird vorzugsweise ein Ultraschallverschweißen von variablen Elementen des gleichen oder ähnlichen Materials mit der Ringscheibe und/oder mit den Lamellen des Lüfterrades ausgeführt, wodurch ein positiver Wuchtausgleich herbeigeführt wird. Dabei ist besonders vorteilhaft, daß nunmehr ein weitgehend stufenloses Auswuchten möglich ist, da Ausgleichselemente beliebiger Gewichtsabstufung realisierbar sind. Dafür können die Elemente von einem Endlosstreifen entsprechend der festgestellten Unwucht geeignet abgelängt und auf die Arbeitsfläche einer Ultraschallsonotrode aufgebracht werden. Ein Ultraschallamboß dient in bekannter Weise als Gegenwerkzeug, so daß jeweils das Verbinden und insbesondere das Aufschweißen der Ausgleichselemente durch deren ultraschallaktiviertes Schwingen gegenüber dem Grundkörper des Lüfterrades erfolgen kann. Gegebenenfalls können auch metallische Teile mittels eines Klebers auf die Unterlage aufgebracht werden, wobei aber das eigentliche Kleben ebenfalls ultraschallaktiviert erfolgt.

Beim erfindungsgemäßen Verfahren zur Durchführung des Unwuchtausgleiches kann ein Handgerät zum Ultraschallschweißen, aber auch eine stationär Schweißeinrichtung verwendet werden die zusammen mit einer Prüfeinrichtung für die Feststellung der Unwucht eine gemeinsame Betriebseinheit bildet.

Weitere Einzelheiten und Vorteile der Erfindung ergeben sich aus der nachfolgenden Figurenbeschreibung von Ausführungsbeispielen anhand der Zeichnung in Verbindung mit den Unteransprüchen.

Es zeigen

FIG 1 und FIG 2 ein bekanntes Lüfterrad in Draufsicht und Seitenansicht;

FIG 3 und FIG 4 eine Anordnung zur Ausführung des erfindungsgemäßen Verfahrens beim Aufschweißen in zwei unterschiedlichen Positionierungen;

FIG 5 einen Teilausschnitt des Lüfterrades mit ultraschallgeschweißten Ausgleichselementen und

FIG 6 Halbzeugmaterial für Ausgleichselemente zum Ultraschallaufschweißen auf Lüfterräder.

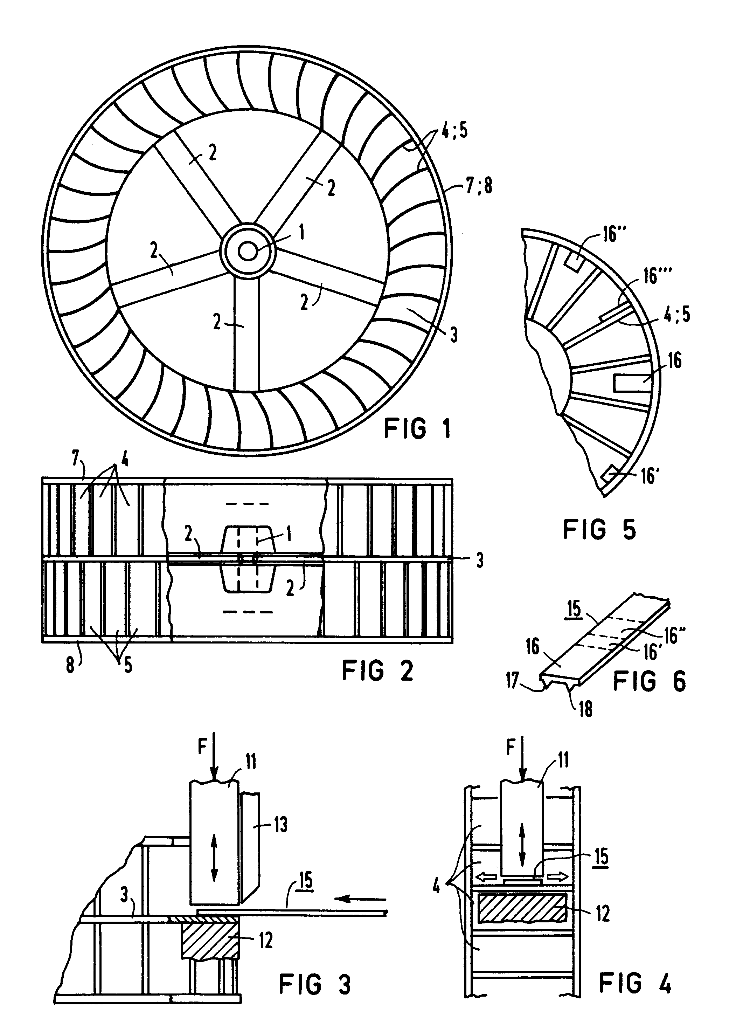

In FIG 1 und FIG 2 ist mit 1 die Nabe eines Lüfterrades bezeichnet, das zwecks Rotation auf eine (nicht dargestellte) Welle aufschiebbar ist. Von der Nabe 1 gehen mehrere Speichen 2 ab, beispielsweise fünf Speichen 2, die im Abstand konzentrisch zur Nabe 1 eine Ringscheibe 3 abstützen. Die Ringscheibe 3 ist Träger einer Vielzahl von konkav ausgestellten Lamellen 4 und 5. Dabei sind die Lamellen 4 und 5 jeweils abwechselnd gegeneinander versetzt auf beiden Seiten der Ringscheibe angeordnet; sie werden an ihrer äußeren

EP 0 348 846 B1

Umfangskante je durch einen konzentrischen Ring 7 und 8 fixiert, während deren innere Abrißkante freiliegt. Das Lüfterrad ergibt sich so insgesamt als stabiles Bauteil.

Das in FIG 1 und FIG 2 dargestellte Lüfterrad ist nur beispielhaft zu betrachten. Alternative Lüfterräder können aus einer Nabe 1 mit unmittelbar daran angebrachter Ringscheibe 3 für lediglich eine Reihe von Lamellen 4 ausgebildet sein. Die Lamellen 4 können auch unmittelbar als gewölbte Schaufeln auf der Nabe angebracht sein. Derartige Lüfterräder sind prinzipiell in axialer oder radialer Ausbildung vom Stand der Technik bekannt. Sie bestehen insbesondere aus thermoplastischem Kunststoff und werden vorteilhafterweise durch Spritzgießen in Massenfertigung hergestellt. Aufgrund zwangsläufig vorhandener Ungenauigkeiten bei der Massenfertigung haben derartige Lüfterräder aber normalerweise eine Unwucht, die im Rahmen der Qualitätssicherung vor der Freigabe der Teile beseitigt werden muß.

Bisher wurde die Unwucht derartiger Lüfterräder aus Kunststoff durch Aufsetzen von metallischen Wuchtklammern auf die Lamellen 4 bzw. 5 gemäß FIG 1 und FIG 2 beseitigt. Hierfür stehen Wuchtklammern mit Gewichtsabstufungen zur Verfügung. Dabei wird in einem Prüfplatz das Lüfterrad auf eine Dreheinrichtung aufgesetzt, beim Drehen die Unwucht festgestellt und durch Aufsetzen entsprechender Wuchtklammern ein positiver Unwuchtausgleich durchgeführt. Trotz Automatisierung der Prüfplätze, bei denen unmittelbar angeben wird, welche Wuchtklammern verwendet werden müssen, sind Ungenauigkeiten beim Stand der Technik nicht zu vermeiden und weitgehend von der Sorgfalt der ausführenden Person abhängig.

Zum Erreichen der in der Praxis angestrebten Erhöhung der Wuchtgüte müßten Klammern mit geringem und feinstabgestimmten Gewichten verwendet werden. Bei Klammern mit geringstem Gewicht verkleinern sich die Abmessungen aber so weit, daß eine sinnvolle Handhabung nicht mehr möglich ist.

Unabhängig davon besteht auch die Gefahr, daß beim bestimmungsmäßigen Gebrauch der herkömmlich angewuchteten Lüfterräder versehentlich oder absichtlich Wuchtklammern entfernt werden und dadurch später im praktischen Betrieb unkontrolliert Unwucht an einem Lüfterrad erzeugt wird.

Es wird vorgeschlagen, als Ausgleichselemente ein Teil aus solchem Material zu wählen, das mit dem Kunststoff des Lüfterrades insbesondere eine Schweißverbindung eingehen kann. Dafür ist das Ausgleichselement vorteilhafterweise aus dem gleichen Material wie das Lüfterrad gebildet und steht als bandförmiges Halbzeug zur Verfügung, von dem Elemente geeigneter Länge abgetrennt werden. Da dieses Material ein geringeres spezifisches Gewicht als Metall hat, lassen sich bei gleichem Gewicht größere und damit leichter handhabbare Elemente verwenden.

In FIG 3 und FIG 4 ist jeweils ein Lüfterrad 1 bis 8 gemäß FIG 1 und FIG 2 in zwei unterschiedlichen Positionierungen zusammen mit einem Werkzeug für das Ultraschallschweißen angedeutet. Es ist eine Sonotrode 11 und ein zugehöriger Amboß 12 erkennbar, die in FIG 3 beidseitig der Ringscheibe 3 und in FIG 4 beidseitig einer Lamelle 4 angeordnet sind. Dabei definiert der Amboß 12 eine Auflage zum Ultraschallschweißen und die Sonotrode 11 das zugehörige Ultraschallwerkzeug, das in vertikaler Richtung verschiebbar ist und durch Druck einerseits und senkrechte Ultraschallschwingungen mit vorgegebener Frequenz und Amplitude sowie Leistung andererseits einen Verschweißvorgang aktivieren kann. Beispielsweise wird - wie beim Ultraschallschweißen von Kunststoffen üblich - mit einer Frequenz von 20 kHz, eine Amplitude von $25$ μm und einer Leistung von 1000 W gearbeitet.

Die Sonotrode 11 wird jeweils senkrecht zur Schweißebene zugeführt. Der Amboß 12 ist mit seiner Auflagefläche an die Kontur der Schweißebene angepaßt. Zwischen Sonotrode 11 und der durch den Amboß 12 abgestützten Fläche der Ringscheibe 3 oder der Lamelle 4 wird ein Ausgleichselement 15 eingeschoben und in geeigneter Länge durch ein Schneidmesser 13 abgetrennt. Das abgelängte Teil 16 kann dann unmittelbar in der vorgegebenen Lage durch die Druckkraft F in Verfbindung mit der Ultraschalleinwirkung mit der Ringscheibe 3 oder der Lamelle 4 unlösbar verbunden werden, wobei das Material des Lüfterrades und des Ausgleichselementes eine Schweißverbindung eingeht.

Speziell die Anordnung nach FIG 4 hat den Vorteil, daß das Ausgleichselement 16 in unterschiedlicher Lateralstellung auf die Lamelle 4 des Lüfterrades aufgebracht werden kann. Dazu sind Sonotrode 11, Amboß 12 und Schneidmesser 13 in Querrichtung verschiebbar angeordnet. Mit einer solchen Anordnung kann auch eine Taumelbewegung bei ausgedehnten Lüfterrädern ausgewuchtet werden. Selbstverständlich können verschiedene Ausgleichselemente 16 in Kombination auf die Ringscheibe 3 und die Lamellen 4 bzw. auf Schaufeln von Axial-Lüfterrädern nach dem beschriebenen Verfahren aufgebracht werden.

In FIG 5 sind Teile 16 als Ausgleichselemente unlösbar mit der Ringscheibe 3 bzw. der Lamelle 4 verbunden. Für die exakte Bestimmung der Unwucht bzw. Herbeiführung des Unwuchtausgleiches wird - wie beim Stand der Technik - zunächst automatisch auf dem Prüfplatz die Unwucht festgestellt, dann die notwendige Länge des Ausgleichselementes bestimmt und anschließend das Schneidmesser 13 bei der automatischen Zuführung des Streifens 15 so gesteuert, daß jeweils ein definiertes Teil 16 vom Streifen 15 abgeschnitten und unmittelbar an der vorbestimmten Stelle aufgeschweißt wird.

Aus FIG 5 sind derartige Ausgleichselemente unterschiedlicher Länge als Teile 16 bzw. 16' oder 16" auf

3

der Ringscheibe erkennbar. Ein weiteres Ausgleichselement 16''' ist auf einer Lamelle 4 befestigt. Es kann somit ein optimales Auswuchten durch die Vielzahl der Möglichkeiten unterschiedlicher Ausgleichselemente 16 durch Variation der Länge und/oder Lage am Lüfterrad herbeigeführt werden.

Für das Ultraschallschweißen von Elementen unterschiedlichen Gewichtes ist es zweckmäßig, einen Endlosstreifen 15 gemäß FIG 6 als Halbzeug zu verwenden, der auf seiner Unterseite profiliert ausgebildet ist und sogenannte Schweißdächer 17 und 18 aufweist, die als Energierichtungsgeber dienen. Bei einer solchen Ausbildung des Streifens 15 wird immer eine hinreichend gute Schweißverbindung erzielt. Das gewünschte Gewicht eines Einzelelementes 16 wird allein durch dessen variable Länge bestimmt.

Eine anhand der FIG 3 und FIG 4 im wesentlichen funktionsmäßig beschriebene Vorrichtung kann als Handgerät ausgebildet sein. Sie kann aber auch in eine stationäre Einrichtung integriert sein, die insbesondere die Prüfeinrichtung zur Feststellung der Unwucht umfaßt, so daß das Aufschweißen der Ausgleichselemente in einem integrierten Fertigungsvorgang erfolgt.

Für den Fall, daß die Lüfterräder nicht aus thermoplastischem Kunststoff, sondern aus duroplastischem Kunststoff oder gegebenenfalls aus Metall bestehen, kann als Ausgleichselement auch ein mit thermoplastischem Kunststoff oder Schmelzkleber beschichtetes Teil verwendet werden. Dieses Teil wird durch thermische Erwärmung oder Ultraschallschweißen in der oben beschriebenen Weise an geeigneter Stelle mit dem Lüfterrad verbunden. In diesem Fall ist man nicht mehr auf thermoplastischen Kunststoff als Material für das Lüfterrad angewiesen.

**Patentansprüche**

1. Verfahren zur Herbeiführung des Unwuchtausgleiches bei einem Lüfterrad, insbesondere einem Lüfterrad aus thermoplastischem Kunststoff, bei dem auf eine Drehachse aufsteckbar eine Nabe mit einer konzentrischen Ringscheibe mit wenigstens einer Reihe von Lamellen vorhanden ist und bei dem die durch herstellungsbedingte Unrundheiten bewirkte Unwucht über Ausgleichselemente ausgeglichen wird, wobei zur Herbeiführung eines positiven Wuchtausgleiches Ausgleichselemente insbesondere variablen Gewichtes am Lüfterrad befestigt werden, **dadurch gekennzeichnet**, daß die Ausgleichselemente (16, 16', 16'', 16''') zur Beseitigung der Unwucht durch Ultraschalleinwirkung am Lüfterrad (3, 4, 5) befestigt werden, wo sie mit dem auszuwuchtenden Lüfterrad (3, 4, 5) eine unlösbare Verbindung eingehen.

2. Verfahren nach Anspruch 1, **dadurch gekennzeichnet**, daß die Ausgleichselemente (16, 16', 16'', 16''') unlösbar mit der Ringscheibe (3) und/oder den Lamellen (4, 5) verbunden werden.

3. Verfahren nach Anspruch 1, **dadurch gekennzeichnet**, daß als Ausgleichselemente Kunststoffteile (16, 16', 16'', 16''') verwendet werden.

4. Verfahren nach Anspruch 3, **dadurch gekennzeichnet**, daß die Ausgleichselemente (16, 16', 16'', 16''') aus dem gleichen Material wie das Lüfterrad (1 bis 8) bestehen.

5. Verfahren nach Anspruch 1, **dadurch gekennzeichnet**, daß die Ausgleichselemente (16, 16', 16'') auf der Ringscheibe (3) zwischen den Lamellen (4, 5) angebracht werden.

6. Verfahren nach Anspruch 1, wobei an der Ringscheibe eine einzige Reihe von Lamellen angeordnet ist, **dadurch gekennzeichnet**, daß die Ausgleichselemente (16, 16', 16'') auf einer Seite der Ringscheibe (3) angebracht werden.

7. Verfahren nach Anspruch 1, wobei an der Ringscheibe zwei Reihen von gegeneinander versetzten Lamellen angeordnet sind, **dadurch gekennzeichnet**, daß die Kunststoffteile (16, 16', 16'') abwechselnd auf beiden Seiten der Ringscheibe (3) angebracht werden.

8. Verfahren nach Anspruch 1, **dadurch gekennzeichnet**, daß die Ausgleichselemente (16''') auf den Lamellen (4, 5) in variabler Lateralstellung angebracht werden.

9. Verfahren nach Anspruch 1, **dadurch gekennzeichnet**, daß die Ausgleichselemente (16, 16', 16'', 16''') von einem Endlosstreifen (15) entsprechend der festgestellten Unwucht geeignet abgelängt und auf der Arbeitsfläche einer Ultraschallsonotrode (11) zwecks Aufschweißen auf das auszuwuchtende Lüfterrad (3, 4, 5) angeordnet werden.

10. Verfahren nach Anspruch 9, **dadurch gekennzeichnet**, daß die abgelängten Ausgleichselemente (16, 16', 16'', 16''') in Taschen auf der Arbeitsfläche der Sonotrode (11) gehalten werden.

11. Verfahren nach Anspruch 9, **dadurch gekennzeichnet**, daß die abgelängten Ausgleichselemente (16, 16', 16'', 16''') auf der Arbeitsfläche der Sonotrode (11) mittels einer Fixierfeder gehalten werden.

12. Verfahren nach Anspruch 9, **dadurch gekennzeichnet**, daß die abgelängten Ausgleichselemente (16, 16', 16'', 16''') auf der Arbeitsfläche der Sonotrode (11) durch Ansaugen gehalten werden.

13. Verfahren nach Anspruch 9, **dadurch gekennzeichnet**, daß die Ultraschallsonotrode (11) mit abgelängtem Ausgleichselement (16, 16', 16'', 16''') senkrecht zur Schweißebene am Lüfterrad (3, 4, 5) auf das aus-

4

EP 0 348 846 B1

zuwuchtende Teil herangeführt wird.

14. Verfahren nach Anspruch 13, **dadurch gekennzeichnet**, daß die Ultraschallsonotrode (11) mit abgelängtem Ausgleichselement (16, 16′, 16″, 16‴) und zugehörigem Ultraschallschweißamboß (12) in axialer Richtung bezogen auf das Lüfterrad (3, 4, 5) zum Herstellen der Schweißverbindung orientiert ist.

15. Verfahren nach Anspruch 9, **dadurch gekennzeichnet**, daß die Ultraschallsonotrode (11) mit abgelängtem Ausgleichselement (16, 16′, 16″, 16‴) und zugehörigem Ultraschallschweißamboß (12) in radialer Richtung bezogen auf das Lüfterrad (3, 4, 5) zum Herstellen der Schweißverbindung auf das auszuwuchtende Teil herangeführt wird.

16. Verfahren nach Anspruch 1, wobei das Lüfterrad aus duroplastischem Kunststoff oder aus Metall besteht, **dadurch gekennzeichnet**, daß ein an der Fügefläche mit thermoplastischem Kunststotf oder Schmelzkleberbeschichtetes Ausgleichselement verwendet wird, das durch thermische Erwärmung mittels Ultraschall oder Ultraschallschweißen mit dem Lüfterrad unlösbar verbunden wird.

17. Verfahren nach einem der vorgehenden Ansprüche 2, **dadurch gekennzeichnet**, daß ein Handgerät zum Ultraschallschweißen verwendet wird.

18. Verfahren nach einem der vorgehenden, **dadurch gekennzeichnet**, daß eine stationäre Einrichtung zum Ultraschallschweißen verwendet wird, die mit der Prüfeinrichtung eine einzige Betriebseinheit für eine integrierte Fertigung bildet.


## Claims

1. A method for bringing about correction of imbalance in a fan wheel, in particular a fan wheel made of thermoplastics, in which there is provided a hub, able to be placed on a rotary axle, with a concentric annular disc with at least one row of blades, and in which imbalance caused by eccentricities introduced during manufacture is corrected by way of balancing elements, wherein in order to bring about a positive balance of momentum, balancing elements, particularly of variable weight, are secured to the fan wheel, characterised in that the balancing elements (16,16′,16″,16‴) for removing the imbalance are secured to the fan wheel (3,4,5) under ultrasonic influence, being unreleasably connected to the fan wheel (3,4,5) to be balanced out.

2. A method according to claim 1, characterised in that the balancing elements (16,16′,16″,16‴) are unreleasably secured to the annular disc (3) and/or to the blades (4,5)

3. A method according to claim 1, characterised in that plastic parts (16, 16′, 16″,16‴) are used as balancing elements

4. A method according to claim 3, characterised in that the balancing elements (16, 16′, 16″,16‴) are of the same material as the fan wheel (1 to 8).

5. A method according to claim 1, characterised in that the balancing elements (16, 16′, 16″,16‴) are attached to the annular disc (3) between the blades (4,5)

6. A method according to claim 1, wherein a single row of blades is arranged on the annular disc, characterised in that the balancing elements (16, 16′, 16″) are attached to one side of the annular disc (3).

7. A method according to claim 1, wherein two rows of blades offset relative to one another are arranged on the annular disc, characterised in that the plastic parts (16, 16′, 16″) are attached alternately on both sides of the annular disc (3).

8. A method according to claim 1, characterised in that the balancing elements (16‴) are attached to the blades (4,5) with variable lateral positioning.

9. A method according to claim 1, characterised in that the balancing elements (16, 16′, 16″,16‴) are cut from one continuous strip (15) into suitable lengths corresponding to the imbalance ascertained and arranged on the working face of an ultrasonic sonotrode (11) for the purpose of being welded onto the fan wheel (3,4,5) to be balanced out.

10. A method according to claim 9, characterised in that the cut-to-length balancing elements (16, 16′,16″,16‴) are held in pockets on the working face of the sonotrode (11).

11. A method according to claim 9, characterised in that the cut-to-length balancing elements (16, 16′, 16″, 16‴) are held on the working face of the sonotrode (11) by means of a fixing spring.

12. A method according to claim 9, characterised in that the cut-to-length balancing elements (16, 16′,16″,16‴) are held on the working face of the sonotrode (11) by means of suction.

13. A method according to claim 9, characterised in that the ultrasonic sonotrode (11) with the cut-to-length balancing element (16, 16′, 16″, 16‴) is brought, perpendicular to the welding plane on the fan wheel (3,4,5), to the part to be balanced out.

14. A method according to claim 13, characterised in that the ultrasonic sonotrode (11) with the cut-to-length balancing element (16, 16′, 16″, 16‴) and the associated ultrasonic welding anvil (12) are orientated in the axial direction relative to the fan wheel (3,4,5) in order to produce the welded connection.

15. A method according to claim 9, characterised in that the ultrasonic sonotrode (11) with the cut-to-length balancing element (16, 16′, 16″, 16‴) and associated ultrasonic welding anvil (12) are brought, in the radial direction relative to the fan wheel (3,4,5), to the part to be balanced out in order to produce the welded connection.

16. A method according to claim 1, wherein the fan wheel consists of duroplastics or of metal characterised in that a balancing element coated with thermoplastics or fusion adhesive on the joint surface is used, which is unreleasably secured to the fan wheel by thermal heating by means of ultrasonics or ultrasonic welding.

17. A method according to any preceding claim, characterised in that a hand-held apparatus is used for ultrasonic welding.

18. A method according to any preceding claim, characterised in that a stationary device is used for ultrasonic welding, which, with the testing device, forms an individual operating unit for integrated production.

## Revendications

1. Procédé pour équilibrer une roue de ventilateur, notamment une roue de ventilateur réalisée en une matière thermoplastique, selon lequel un moyeu à disque annulaire concentrique comportant au moins une série de lamelles est monté, de manière à pouvoir y être enfiché, sur un axe de rotation et selon lequel on compense le balourd provoqué par des faux-ronds conditionnés par la fabrication, au moyen d'éléments d'équilibrage par fixation d'éléments d'équilibrage possédant notamment un poids variable sur le rotor du ventilateur pour réaliser' un équilibrage positif, caractérisé par le fait qu'on fixe les éléments d'équilibrage (16,16′,16″,16‴) servant à éliminer le balourd, au moyen de l'action d'ultrasons, sur le rotor (3,4,5) du ventilateur, où ils établissent une liaison inamovible avec le rotor du ventilateur (3,4,5) devant être équilibré.

2. Procédé suivant la revendication 1, caractérisé par le fait qu'on raccorde de façon inamovible les éléments d'équilibrage (16,16′,16″,16‴) au disque annulaire (3) et/ou aux lamelles (4,5).

3. Procédé selon la revendication 1, caractérisé en ce qu'on utilise comme élément d'équilibrage des pièces en matière plastique (16,16′,16″,16‴).

4. Procédé suivant la revendication 3, caractérisé par le fait que les éléments d'équilibrage (16,16′,16″,16‴) sont réalisés avec le même matériau que le rotor (1 à 8) du ventilateur.

5. Procédé suivant la revendication 1, caractérisé par le fait qu'on dispose les éléments d'équilibrage (16,16′,16″,16‴) sur le disque annulaire (3) entre les lamelles (4,5).

6. Procédé suivant la revendication 1, à une série unique de lamelles disposée sur le disque annulaire, caractérisé par le fait qu'on monte les éléments d'équilibrage (16,16′,16″,16‴) sur une face du disque annulaire (3).

7. Procédé suivant la revendication 1, à deux séries de lamelles décalées les unes par rapport aux autres qui sont disposées sur le disque annulaire, caractérisé par le fait qu'on dispose les pièces en matière à plastique (16,16′,16″) alternativement sur les deux faces du disque annulaire (3).

8. Procédé suivant la revendication 1, caractérisé par le fait qu'on dispose les éléments d'équilibrage (16‴) sur les lamelles (4,5), dans des positions latérales variables.

9. Procédé suivant la revendication 1, caractérisé par le fait que les éléments d'équilibrage (16,16′,16″,16‴) sont coupés de façon appropriée à longueur à partir d'une bande sans fin (15), en fonction du balourd déterminé et sont placés sur la surface de travail d'une sonotrode à ultrasons (11) servant à souder lesdits éléments sur le rotor de ventilateur (3,4,5) devant être équilibré.

10. Procédé suivant la revendication 9, caractérisé par le fait que les éléments d'équilibrage (16,16′,16″,16‴) coupés à longueur sont maintenus dans des poches situées sur la surface de travail de la sonotrode (11).

11. Procédé suivant la revendication 9, caractérisé par le fait que les éléments d'équilibrage (16,16′,16″,16‴) coupés à longueur sont maintenus sur la surface de travail de la sonotrode (11) à l'aide d'un ressort de fixation.

12. Procédé suivant la revendication 9, caractérisé par le fait que les éléments d'équilibrage (16,16′,16″,16‴) coupés à longueur sont maintenus par aspiration sur la surface de travail de la sonotrode (11).

13. Procédé suivant la revendication 9, caractérisé par le fait qu'on approche la sonotrode à ultrasons (11) ainsi que l'élément d'équilibrage (16,16′,16″,16‴) coupé à longueur, de la partie devant être équilibrée, perpendiculairement au plan de soudage sur le rotor (3,4,5) du ventilateur.

14. Procédé suivant la revendication 13, caractérisé par le fait que la sonotrode à ultrasons (11) ainsi qu'un élément d'équilibrage (16,16′,16″,16‴) coupé à longueur et l'enclume à soudage à ultrasons (12) sont orientés dans une direction axiale par rapport au rotor (3,4,5) du ventilateur, pour réaliser la liaison soudée.

15. Procédé suivant la revendication 9, caractérisé par le fait qu'on approche la sonotrode à ultrasons (11) ainsi que l'élément d'équilibrage (16,16',16'',16''') coupé à longueur et l'enclume de soudage à ultrasons associée (12), de la pièce à équilibrer, dans une direction radiale par rapport au rotor (3,4,5) du ventilateur, pour réaliser la liaison soudée.

16. Procédé suivant la revendication 1, selon lequel le rotor du ventilateur est réalisé en une matière plastique thermodurcissable ou en un métal, caractérisé par le fait qu'on utilise un élément d'équilibrage dont la surface de jonction est recouverte par une matière thermoplastique ou une colle fusible et est reliée de façon inamovible, par chauffage thermique par ultrasons ou par soudage par ultrasons au rotor du ventilateur.

17. Procédé suivant l'une des revendications précédentes, caractérisé par le fait qu'on utilise un appareil manuel pour le soudage par ultrasons.

18. Procédé suivant l'une des revendications précédentes, caractérisé par le fait qu'on utilise un dispositif fixe pour réaliser le soudage par ultrasons, qui forme, avec le dispositif de contrôle, une unité de fonctionnement de monobloc pour une fabrication intégrée.

FIG 1

FIG 2

FIG 5

FIG 6

FIG 3

FIG 4